# EUROPEAN PATENT APPLICATION

(11) **EP 1 845 027 A1**
(43) Date of publication of application: **17.10.2007**
(21) Application number: 05815763.7
(22) Date of filing: 08.11.2005
(51) Int. Cl.: B65D 39/00, C08L 25/10, C08L 23/06, B67B 1/00

(54) **COMPOSITIONS FOR HERMETIC CONTAINER CLOSURES AND HERMETIC CLOSURES COMPRISING SAME**

(30) Priority: 08.11.2004 ES 200402684
(71) Applicant: Tapón Corona Ibérica, S.A., 28914 Leganés (ES)
(72) Inventor: DEL POZO DUARTE, Federico, E-28914 Leganés (ES); TEUMAC, Fred, M., E-28914 Leganés (ES)
(74) Representative: Elzaburu Marquez, Alberto
(86) International application number: PCT/ES2005/000604
(87) International publication number: WO 2006/051144

(57) **Abstract**

To date, in order to meet the difficult requirements relating to twist-off cap closures, use has been made of plasticized PVC compounds. Replacement of PVC compounds in the closure would enable the industry to take advantageous use of twist-off cap closures that do not have the drawbacks generated by the use of PVC.

The present invention relates to compositions for hermetic closures for receptacles and also to hermetic closures for carbonated-drinks receptacles, which comprise the above compositions and which are designed so that their cap can easily be twisted off. The properties of internal pressure retention and ease of removal of the closure are largely determined by the closure seal. Since the properties of the closure seal that increase pressure retention cause proportional increments in the opening moment, it is difficult to achieve acceptable compromise solutions that satisfy all combinations of specifications. By selecting a suitable relationship between these two parameters, it is possible to design closure seals that comply with the most stringent specifications.

## Description

The use of bottles as containers for containing foods or beverages is, in practice, very common. The bottle is usually manufactured from glass or from a rigid or semi-rigid plastics polymer. The bottle is provided with what is termed a "mouth" for accommodating the bottle cap. The bottle is closed in its upper part with a high-strength component that is usually made from metal or from a rigid plastics polymer. In order to be able to obtain hermetic closure between the mouth of the bottle and the closure or cap, the latter incorporates a flexible membrane or closure seal. In combination, these components constitute a container.

A very desirable type of container is that in which the cap can easily be twisted off. On the market, this is known as a twist-off bottle (cap removed from the bottle by twisting). In addition to complying with all the other requirements for the hermetic closure, there is the requirement of ease of removal of the cap. To achieve a satisfactory opening moment and simultaneously to obtain satisfactory resistance to the internal pressure is difficult because the properties of the polymer that generate a decrease in respect of one property also have the same effect on the other.

The closure seal is an essential component in this closure or cap for receptacles. Another desirable characteristic is that the closure seal should not contain materials that are suspected of giving rise to health or environmental problems. Although plasticized PVC (polyvinyl chloride) has been used for such receptacles, increasing pressure on the part of the authorities and private interests has meant that PVC is regarded as an unsatisfactory product.

The present invention relates to a closure seal that complies with all these criteria. It consists of a thermoplastic composition that is a homogenous blend of a thermoplastic rubber and another, thermoplastic polymer. The thermoplastic rubber is a 70/30% solution polymerization of butadiene/styrene linear copolymer. The thermoplastic polymer is polypropylene, polyethylene or EVA (ethyl/vinyl acetate) modified polyethylene. The ratios of the two components are from 20 to 80% by weight of thermoplastic rubber and from 80 to 20% of the thermoplastic polyolefin. The use of said closure seal allows the controlled exit of gas at high pressure and at the same time low opening moments for twist-off cap closures. It is possible to improve the process properties of the thermoplastic composition by means of the inclusion of additives and by changing the process conditions. In addition, correct selection of the profile for the closure seal and also of the characteristics of the metal would improve the container's behavior.

A secondary embodiment of this invention is that the hardness of the PVC-free closure seals, for the purposes of prying off (known as pry-off caps), may be reduced without the addition of hydrocarbon oils.

### Background

PVC compounds have been used for several decades as closure seals for hermetic closures or caps. However, the suspicion is that PVC compounds are implicated in environmental problems and contain ingredients that - it is believed - may case health problems. The replacement of PVC compounds is a long-term objective.

At the end of the 1980s, PVC-free compounds were introduced for closure seals. The applications have been satisfactory only for pry-off caps. Such closures or caps are removed by simply prying off the cap in order to separate it from the receptacle. The other behavior and process criteria may be fulfilled easily without the need for concern about how the closure rotates on the bottle's mouth.

Consequently, PVC-free pry-off closure seals may be formulated easily using polyolefins. GB patents nos 1 112 023 and 1 112 025 describe methods for selecting compounds for closure seals and for forming them. However, by their very nature, polyolefins are hard materials with well-defined softening points. The Shore A hardness of these blends may be 90 or higher. Compositions with a Shore A hardness of 90 and above have limited application in the case of closure-seal compounds, since a sudden movement could cause the bottles to leak. With a view to solving this problem, compounds are softened by means of the addition of hydrocarbon oils. The oils are undesirable because they volatilize during the process and adherence to the metallic part of the closure or cap is reduced.

Other compounds for PVC-free closure seals have been designed to act as gas permeability barriers. This has been achieved by blending low-density polyethylene with butyl thermoplastic rubber (EPA 599356A1). Low-density polyethylene has good barrier properties, but it is a very hard polymer. In commercial practice, it is necessary to add oil in order to soften the closure seal, but the resulting compound is still very hard. These closure seals are especially susceptible to leaks. In fact, when a bottle with a closure made from this material is dropped during the packaging process, said bottle must be withdrawn owing to the above-mentioned risk of leakage.

For practical reasons, it is important for a closure-seal compound to have the following characteristics:
- it must be possible to mix the components in standard polymer blending equipment
- it has to be possible for it to be extruded in a standard assembly machine
- it has to withstand the process temperatures
- it has to have a sufficient flow through the extruder to afford a high level of productivity
- it has to lend itself to the molding of the closure seal
- it has to offer satisfactory adherence to the metal crown
- it has to comply with health regulations
- the resulting caps ought to comply with all the standard behavior characteristics, namely:
   - providing an opening moment of 4.60 to 13.82 kg·cm (4 to 12 pounds per inch);
   - providing a resistance to the internal pressure of 6 to 12.5 bar.

To date, plasticized PVC compounds have been used to meet the difficult requirements of twist-off caps. This invention discloses compositions and hermetic closures that comprise said compositions in order to obtain hermetic twist-off cap closures that do not use PVC in the closure seals.

In addition, materials and processes are disclosed that provide closure seals with a lower hardness, with minimal or no use of hydrocarbon oils.

The examples demonstrate that by varying the proportions of thermoplastic rubber with each of the thermoplastic polymers closure seals with different properties are obtained. The preferred range was 35/65 thermoplastic rubber/thermoplastic polymer. However, the ratios of 80/20 to 20/80 offer different, useful properties.

The preferred thermoplastic polymer was PP-303, a polypropylene with a melt flow index (MFI) of 14 g/10 minutes (230°C and 2.16 kg) and a Shore D hardness of 30.

The only thermoplastic polymer listed that was difficult to use was thermoplastic polypropylene PP-400, whose hardness was too high (Shore D 68).

The specifications for metals in the closure or cap were 0.22 to 0.23 mm in bell or continuous annealing. A satisfactory closure could be achieved with 0.215 mm continuously annealed steel.

A hermetic-closure seal design, with internal and external sealing, using 190 mg of hermetic-closure compound per cap exhibited the best behavior. From 180 to 220 mg would be acceptable.

The addition of 2 to 3.5 parts of Croda (an erucamide) as lubricant was ideal for lubricating the extruder. Croda and other lubricants presented certain advantages from 1 part to 5 parts.

The addition of Kristol (a hydrocarbon oil from petroleum refining, with a viscosity of 70 cSt at 40°C) was unnecessary, but it could be used in order to soften the compound. A 2-5% margin could be employed before the detection of smoke in the assembling machine.

### EXAMPLES

The properties of PVC may be adjusted by means of the selection of resin and the use of plasticizers with a view to achieving the characteristics required for twist-off-cap closure seals. The most important properties are the melt flow index, surface hardness and compressive modulus. Since the same extrusion and molding equipment had to be used as for PVC, the melt flow index was important. The hardness and compression modulus are important because they influence how the closure seal will interact with the bottle's mouth. The closure pressure and extent of contact determine the resistance to the internal pressure and the opening moment.

To determine these properties, measurements were performed on twist-off-cap closure-seal compounds. It was decided that the objectives for the new closure-seal compounds should be a melt flow index of ~ 19 grams/10 minutes, a hardness of ~ 70 and a compressive modulus of ~ 50% (one hour at 60°C). The compressive modulus is an elastic property. A value of 50% determines that the composition would have to be a rubber or a blend of rubbers. A thermoplastic rubber was necessary because the crosslinking would give rise to a contraction in the material that would cause changes in its dimensions and therefore a loss of adhesion to the metal cap or closure. The resulting hardness is generally determined by the weight proportion and hardness of each component.

No PVC-free polymer complied with the specifications proposed. Theoretically, a blend of a thermoplastic rubber and a thermoplastic polymer might approximate to the objective. By modifying the composition of the material, and with an appropriate choice of metal, a satisfactory closure could be obtained.

The thermoplastic rubber used was a 70/30 butadiene/styrene linear copolymer that had been polymerized in solution. Its melt flow index is approximately 5 grams/10 minutes (190°C and 5 kg) and the Shore A hardness 68. This will be abbreviated to and denoted as TPR in the tables.

The following thermoplastic polymers were selected:
- polyethylene polymer with a melt flow index of 7 grams/10 minutes, Shore A hardness 75, denoted as PE - 201;
.- polyethylene polymer with a melt flow index of 20 grams/10 minutes, Shore A hardness 68, denoted as PE - 202;
.- polypropylene polymer with a melt flow index of 14 grams/10 minutes, Shore D hardness 30, denoted as PP - 303;
- polypropylene polymer with a melt flow index of 8 grams/10 minutes, Shore D hardness 30, denoted as PP - 302;
.- polypropylene polymer with a melt flow index of 7 grams/10 minutes, Shore D hardness 68, denoted as PP - 400;
.- a 90/10 blend of PE/EVA, Shore A hardness 90, denoted as ZP-90.

In all cases, the thermoplastic rubber and the thermoplastic polymer were simply blended with one another, fed through a single-screw extruder, pelletized, cooled with water and dried.

The resulting compounds for hermetic closure seals were tested for hardness and assessed for reproducibility and in-process odor formation. The batches that appeared to be suitable were used in assembling. Use was made of a ZA-matic assembling machine. The pellets were extruded and placed on preformed caps pre-coated with a suitable lacquer. The closures were heated in order to gain adhesion. The closures or caps were cooled to 5°C and the closure seals were molded with the envisaged profile.

Observations were performed on the speed at which the pellets had sufficient material to fill the mold, the placing of the pellet in the closure or cap, odor production, moldability of the compound and adhesion achieved in the closure or cap.

The resulting closures or caps were tested for adhesion for 30 minutes in boiling water. The closures or caps from the batches with sufficient adhesion were then used to form and to test the complete container (opening moments and internal pressures).

Glass bottles with mouths for twist-off caps were filled with carbonated water and capped. The opening moments and the resistance to the internal pressure were tested. Those bottles that achieved the required values of 4-12 pounds per inch for the opening moment and 6-12.5 bar for the internal pressure were assessed to ascertain possible changes over time, and were also evaluated in terms of their ability to withstand stacking.

### Example 1

| Compound | 8 | 12 | 13 | 14 | 15 | 19 |
|---|---|---|---|---|---|---|
| Percentages | | | | | | |
| TPR | 20 | 80 | 80 | 80 | 50 | 60 |
| ZP-90 | 80 | | 20 | 10 | | 40 |
| EVA | | 20 | | 10 | 50 | |
| Hardness | 94 | 62 | 70 | 68 | 85 | 84 |

### Results:

No 8 functioned well in the assembling machine and its adhesion was adequate.

No 12 did not function in the assembling machine; deficient adhesion.

Nos 13 and 14 did not function in the assembling machine; deficient adhesion.

No 15 functioned well in the assembling machine; a degree of adhesion.

No 19 functioned well in the assembling machine; deficient adhesion.

Since the interior lacquer was designed for polyethylene, the proportion of TPR was too high.

### Example 2

| Compound | 21 | 22 | 23 | 24 | 25 | 26 | 27 |
|---|---|---|---|---|---|---|---|
| Percentages | | | | | | | |
| TPR | 50 | 60 | 70 | 50 | 40 | 30 | 70 |
| PP400 | | | | | | | 30 |
| PE-201 | 50 | 40 | 30 | | | | |
| PE-202 | | | | 50 | 60 | 70 | |
| Hardness | 66 | 59 | | 59 | | | 82 |

### Results:

Nos 21, 22, and 23 did not function well in the assembling machine; pellets displaced; correct adhesion.

Nos 24 and 25 functioned very poorly in the assembling machine; deficient adhesion.

No 26 functioned very poorly in the assembling machine; deficient adhesion.

No 27 functioned well in the assembling machine; deficient adhesion.

### Example 3

| Compound | 29 | 30 | 31 | 32 | 33 | 34 | 35 |
|---|---|---|---|---|---|---|---|
| Percentages | | | | | | | |
| TPR | 20 | 30 | 40 | 50 | 60 | 70 | 80 |
| PE-302 | 80 | 70 | 60 | 50 | 40 | 30 | 20 |
| Hardness | 85 | | 77 | | | 71 | |

### Results:

This series of compounds did not function in the assembling machine. The melt flow index of PP-302 was too low.

### Example 4

| Compound | 29+ C | 29C1 | 32+C | 35+C |
|---|---|---|---|---|
| Percentages | | | | |
| TPR | 19.8 | 19.8 | 49.5 | 79.21 |
| PP-302 | 79.21 | | 49.5 | 19.8 |
| PP-400 | | 79.21 | | |
| Croda | 0.99 | | 0.99 | 0.99 |
| Wax | | 0.99 | | |
| Hardness | 84 | | 73 | 70 |

### Results:

The addition of Croda or wax improved behavior in the assembling machine.

### Example 5

| Compound | 27A | 27B | 27C | 27D | 27E | 36 |
|---|---|---|---|---|---|---|
| Percentages | | | | | | |
| TPR | 65.43 | 67.66 | 66.98 | 69 | 81 | 57.14 |
| PP-400 | 28.03 | 25.57 | 25.32 | 30 | 17 | 28.57 |
| Croda | 1.87 | 1.93 | 1.91 | 1.8 | 2.2 | |
| Kristol | 4.67 | 4.82 | 5.79 | | | 14.29 |
| Hardness | 72 | 66 | 67 | 75 | 71 | 58 |

### Results:

The addition of a small amount of Croda and Kristol notably reduced hardness. Owing to the lubrication, all functioned well in the assembling machine. Adhesion was deficient owing to the high level of thermoplastic rubber.

### Example 6

| Compound | 38 | 38-5A | 38-5C | 39 | 40 | 40C |
|---|---|---|---|---|---|---|
| Percentages | | | | | | |
| TPR | 19 | 28 | 27.8 | 49 | 77.45 | 77.76 |
| PP-303 | 78 | 70 | 69.6 | 49 | 19.36 | 19.44 |
| Croda | 3 | 2 | 2.6 | 2 | 3.2 | 2.8 |
| Hardness | 82 | 87 | 81 | 78 | 69 | 66 |

### Results:

Behavior in the assembling machine and adhesion were very good in the case of 38, 38-5A, 38-5C, and 39. It was difficult to carry out assembly with 40 and 40C owing to the shape of the pellets and to worse adhesion to the metal. The influence of polymer hardnesses and proportions in the final hardness is obvious. Since use was made of a coat of varnish as key for the polypropylene, the influence of the proportion of the propylene on adhesion to the closure or cap was also evident. Hardnesses of 38 and 39 were higher than originally envisaged, but all the properties were almost ideal. Obviously, the development of a keying varnish for TPR would allow the use of a higher proportion of TPR, resulting in a softer compound.

### Example 7

Glass bottles with mouths for twist-off caps were filled with carbonated water, capped, pasteurized (62°C for 20 minutes), allowed to stand for 24 hours and then tested.

Closures or caps were made using closure-seal material 38-5, in bell-annealed steel (various thicknesses), and the closure-seal profiles were J and ZD1 (internal and external hermetic closure) and C1 and D1B (internal hermetic closure), as used in all the twist-off-cap PVC compounds.

The values of resistance to internal pressure (SST) were expressed in bar.

| | 0.22 mm | | | | 0.23 mm | | | |
|---|---|---|---|---|---|---|---|---|
| | J | ZD1 | C1 | D1B | J | ZD1 | C1 | D1B |
| Mean | 7.95 | 7.90 | 6.15 | 7.22 | 7.90 | 8.89 | 6.95 | 8.00 |
| Standard deviation | 0.55 | 1.26 | 0.58 | 0.51 | 0.61 | 0.65 | 0.80 | 0.58 |
| Min. | 7.00 | 6.00 | 5.50 | 6.50 | 6.50 | 8.00 | 6.00 | 7.00 |
| Max. | 9.00 | 10.00 | 7.00 | 8.00 | 9.00 | 10.00 | 8.00 | 9.00 |

The values of the opening moments are expressed as pounds per inch

| | 0.22 mm | | | | 0.23 mm | | | |
|---|---|---|---|---|---|---|---|---|
| | J | ZD1 | C1 | D1B | J | ZD1 | C1 | D1B |
| Mean | 8.48 | 6.85 | 6.89 | 9.17 | 8.18 | 8.13 | 8.90 | 8.77 |
| Standard deviation | 1.14 | 1.17 | 0.67 | 0.85 | 0.90 | 0.94 | 0.94 | 1.46 |
| Min. | 6.90 | 4.47 | 5.88 | 7.69 | 7.23 | 6.17 | 7.26 | 6.58 |
| Max. | 10.08 | 8.26 | 7.82 | 10.42 | 9.90 | 9.78 | 9.96 | 10.97 |

A number of experiments were performed using these same variables. In general, removal moments were lower with internal closure seals and the values of resistance to internal pressure were generally higher. The ZD1 closure-seal profile was preferred.

### Example 8

The choice of base steel for the closure or cap and the design of the closure seal interact with the compound to provide a closure suitable for a variety of bottle finishes and/or bottler specifications. A commercial form of Compound 38-5C was selected as base. The commercial compound contained ingredients to assist flow of the compound and to protect it from the environment in the process and storage stages.

### Compound 38-5AM

| | Percentages |
|---|---|
| TPR | 28.00 |
| PP-303 | 69.45 |
| BHT | 0.05 |
| Croda | 2.50 |

Steel caps or closures were prepared from two metals, bell-annealed 0.22 mm ECCS and continuously annealed 0.23 mm ECCS. An interior lacquer, designed to provide adhesion to the polypropylene, was also applied to the two metals.

Two types of twist-off-cap bottle were selected. These bottles were labeled BSN or St. Gobain.

The bottles were filled with carbonated water, capped, pasteurized at 60°C for 20 minutes and tested 24 hours later. The values are expressed in bar (pressures) and pounds per inch (turns).

| | Mold ZD1 | | Mold J | | Mold D1B | | |
|---|---|---|---|---|---|---|---|
| Mean: | Pressure | Turn | Pressure | Turn | Pressure | Turn | |
| 0.23 BSN | 9.60 | 8.85 | 11.90 | 10.76 | 12.16 | 9.85 | |
| 0.23 St Gobain | 8.81 | 7.10 | 9.55 | 9.16 | 10.37 | 8.96 | |
| 0.22 BSN | 7.59 | 6.25 | 8.85 | 7.84 | 8.16 | 6.37 | |
| 0.22 St Gobain | 8.37 | 5.03 | 7.91 | 7.32 | 6.33 | 6.15 | |
| | | | | | | | |

| Standard deviation: | | | | | | | |
|---|---|---|---|---|---|---|---|
| 0.23 BSN | 0.89 | 0.92 | 1.16 | 1.30 | 0.42 | 1.64 | |
| 0.23 St Gobain | 1.10 | 1.26 | 1.40 | 0.92 | 1.98 | 1.04 | |
| 0.22 BSN | 0.74 | 1.05 | 1.65 | 1.68 | 1.65 | 1.29 | |
| 0.22 St Gobain | 0.98 | 0.80 | 0.72 | 1.25 | 0.96 | 0.69 | |
| | | | | | | | |

| Minimum | | | | | | | |
|---|---|---|---|---|---|---|---|
| 0.23 BSN | 7.93 | 7.61 | 7.93 | 8.18 | 10.00 | 7.77 | |
| 0.23 St Gobain | 6.55 | 4.66 | 7.58 | 7.42 | 6.90 | 7.03 | |
| 0.22 BSN | 6.21 | 4.66 | 6.55 | 5.18 | 5.87 | 3.21 | |
| 0.22 St Gobain | 5.87 | 3.56 | 6.21 | 5.67 | 4.14 | 4.69 | |
| | | | | | | | |

| Maximum | | | | | | | |
|---|---|---|---|---|---|---|---|
| 0.23 BSN | 11.04 | 11.14 | 12.71 | 15.20 | 12.25 | 15.60 | |
| 0.23 St Gobain | 10.69 | 10.50 | 12.25 | 10.57 | 12.25 | 11.28 | |
| 0.22 BSN | 9.31 | 9.35 | 12.41 | 13.16 | 12.41 | 9.47 | |
| 0.22 St Gobain | 10.00 | 6.51 | 9.31 | 9.77 | 7.58 | 7.77 | |

It is obvious from the above data that it is possible to obtain a range of permissible data on the basis of only this compound. These compounds have intrinsically low opening moments. If a lower opening moment were required, small amounts of some lubricant would achieve that aim. Greater resistance to internal pressure would be achieved by increasing the metal's mechanical strength. By remaining within the ranges indicated for each grade and type of annealing, the mechanical strength would increase with the greater hardness of the metal. The hardness of the metal may be used for the purposes of fine adjustment of the opening moments and resistance to internal pressure.

Different combinations of polymers, which were shown in the examples, may be used to provide a different selection of properties. Consequently, a choice could be made from the examples described and handling carried out as indicated in Example 8, with a view to achieving other properties.

With the exception of EVA, these polymers are essentially non-reactive and therefore easily allow the inclusion of chemical additives for flame retardance, oxygen scavengers, and antioxidants, etc.

### Example 10

| Compound | 15A | 16 | 17 | 18 | 20 |
|---|---|---|---|---|---|
| | | | | Percentages | |
| TPR | 48.8 | 49.5 | 46.51 | 60 | 27.42 |
| Kristol | | 1 | 1.86 | | |
| ZP-90 | 48.8 | 49.5 | 46.51 | 40 | 63.99 |
| Wax | | | 2.33 | | 1.47 |
| Croda | 2.44 | | | | |
| Ca CO₃ | | | 2.79 | | 4.56 |
| Hardness | 81 | 84 | 78 | 86 | 90 |

**Results:** All functioned in the assembling operation; adhesion lower than that required for twist-off removal, but the properties were suitable for pry-off removal.

## Claims

1. A composition for hermetic closures for receptacles, which comprises from 20 to 80% by weight of a thermoplastic rubber that is a 70/30 butadiene/styrene linear thermoplastic copolymer polymerized in solution, and from 80 to 20% by weight of a thermoplastic polymer selected from the group consisting of polypropylene, polyethylene and ethyl/vinyl acetate (EVA) modified polyethylene.

2. The composition as claimed in claim 1, wherein the thermoplastic rubber has a melt flow index of approximately 5 g/10 minutes (190°C and 5 kg) and a Shore A hardness of approximately 68.

3. The composition as claimed in any one of claims 1 and 2, wherein the thermoplastic polymer is polypropylene with a melt flow index of approximately 14 g/10 minutes (230°C and 2.16 kg) and a Shore D hardness of approximately 30.

4. The composition as claimed in any one of the preceding claims further comprising a lubricant or a hydrocarbon oil.

5. The composition as claimed in claim 4, wherein the lubricant is an erucamide and is in a concentration of 1 to 5% by weight.

6. The composition as claimed in any one of claims 4 and 5, wherein the hydrocarbon oil is a hydrocarbon oil from petroleum refining, with a viscosity of 70 cSt at 40°C and is in a concentration of 2 to 5% by weight.

7. The composition as claimed in any one of the preceding claims, which comprises approximately 28% by weight of 70/30 butadiene/styrene thermoplastic copolymer polymerized in solution, approximately 70% by weight of polypropylene thermoplastic polymer with a melt flow index (MFI) of 14 g/10 minutes (230°C and 2.16 kg) and a Shore D hardness of 30, and approximately 2% of erucamide-type lubricant.

8. The composition as claimed in any one of the preceding claims further comprising antioxidants, flame retardants, reactive ingredients for protecting the closure against chemical or actinic damage or compounds that sweep oxygen and thus prevent the entry of oxygen to the inside of the receptacle.

9. A hermetic closure for receptacles, which comprises a base steel and a composition for hermetic closures as claimed in any one of the preceding claims 1 to 8.

10. The hermetic closure as claimed in claim 9, which comprises from 180 to 220 mg of said composition per cap.

11. The hermetic closure as claimed in either of claims 9 and 10, wherein the base steel has a thickness of 0.215 to 0.230 mm.

12. The hermetic closure as claimed in any one of the preceding claims 9 to 11, wherein the base steel undergoes bell annealing or continuous annealing.

13. The hermetic closure as claimed in any one of the preceding claims 9 to 12, which has an opening moment of 4.60 to 13.82 kg·cm (4-12 pounds per inch) and a resistance to the internal pressure of 6-12.5 bar.

14. The hermetic closure as claimed in any one of the preceding claims 9 to 12, which is of the twist-off type or of the pry-off type.

15. A bottle, which comprises the hermetic closure of any one of the preceding claims 9 to 13.

16. The bottle as claimed in claim 15, whose mouth is adapted so that said closure can be removed by twisting or prying.

17. Use of the hermetic closure of any one of the preceding claims 9 to 14 in the closure of glass or plastics receptacles.

18. A method for manufacturing hermetic closures for receptacles, which comprises the steps of providing, in the closure, a molten portion of a composition as claimed in any one of the preceding claims 1 to 8 and, subsequently, giving it shape by molding, in order to form the closure seal.
